Europäisches Patentamt

European Patent Office

Office européen des brevets

(19)

(11) EP 0 682 304 B1

(12)

# FASCICULE DE BREVET EUROPEEN

(45) Date de publication et mention
de la délivrance du brevet:
**29.12.1999 Bulletin 1999/52**

(51) Int Cl.⁶: **G05B 19/042**

(21) Numéro de dépôt: **95107006.9**

(22) Date de dépôt: **09.05.1995**

(54) **Microsystème à faible consommation d'énergie**

Mikrosystem mit niedrigem Energieverbrauch

Microsystem having low energy consumption

(84) Etats contractants désignés:
**CH DE FR GB LI**

(30) Priorité: **11.05.1994 CH 147394**

(43) Date de publication de la demande:
**15.11.1995 Bulletin 1995/46**

(73) Titulaire: **CSEM**
**Centre Suisse d'Electronique et de**
**Microtechnique S.A.**
**2007 Neuchâtel (CH)**

(72) Inventeur: **Degrauwe, Marc**
**CH-2025 Chez-le-Bart (CH)**

(74) Mandataire: **de Montmollin, Henri et al**
**ICB**
**Ingénieurs Conseils en Brevets SA**
**Rue des Sors 7**
**2074 Marin (CH)**

(56) Documents cités:
**EP-A- 0 570 674          US-A- 4 860 751**
**US-A- 5 198 739**

## Description

La présente invention est relative à des microsystèmes, comme les systèmes de mesure destinés à traiter ou à prendre en compte un signal d'entrée dont la simple présence ou éventuellement un état ou une valeur prédéterminée n'est pas permanent, mais peut alterner selon un cycle temporel plus ou moins aléatoire. Un tel microsystème peut être par exemple un système de mesure chargé de mesurer un paramètre qui peut surgir à tout instant et dont la valeur doit pouvoir être évalué immédiatement par le microsystème dès qu'il se présente.

On sait que les microsystèmes sont souvent utilisés dans des conditions dans lesquelles l'énergie dont ils ont besoin pour travailler n'est pas disponible en grande quantité. Il en est ainsi notamment pour les systèmes alimentés par une pile ou une batterie. Par ailleurs, pour des raisons diverses, telles qu'écologiques ou économiques on cherche à limiter le plus possible l'emploi de telles sources d'énergie, ce qui fait que l'on cherche à prolonger le plus possible la durée de vie de la source d'énergie, donc de les utiliser dans des conditions de consommation optimales.

Or, classiquement, voir notamment le document EP-A-0 570 674, les microsystèmes peuvent disposer d'un circuit de veille qui est capable de réveiller le système et de le faire passer d'un régime à faible puissance dans lequel seuls restent sous tension les organes qui doivent obligatoirement recevoir de l'énergie (les mémoires, par exemple), à un régime à pleine puissance qui permet de faire fonctionner le système dans son intégralité. Le passage du régime de veille au régime de fonctionnement normal est alors déclenché dès qu'une action est effectuée sur le système. Un exemple typique de ce genre de fonctionnement est le micro-ordinateur personnel dont l'écran et d'autres fonctionnalités peuvent être mis en veille ou être réveillés, cette dernière opération intervenant dès que l'opérateur actionne une touche du clavier de l'ordinateur.

Un autre exemple, plus général, est celui des microprocesseurs dans des microsystèmes de toutes sortes dans lesquels le déroulement du programme n'est déclenché que par une action extérieure qui le fait passer de l'exécution d'une boucle de programme de veille à l'exécution du programme proprement dit. Cet exemple est souvent désigné par le vocable anglais "watchdog". D'autres exemples sont encore connus des documents US-A-4,860,751 ou US-A-5,158,739.

Toutefois, dans certains cas, et notamment dans les systèmes de mesure, les circuits de veille/réveil classiques ne sont pas appropriés. Par ailleurs, certains phénomènes à mesurer, par exemple, ont des récurrences tout à fait aléatoires avec des périodes d'absence et de présence de durées également imprévisibles, alors que le système doit se mettre à fonctionner dès une nouvelle apparition du phénomène.

Il est également connu dans certains systèmes de mesure de diminuer leur consommation en réduisant volontairement la sensibilité du système vis-à-vis du phénomène à mesurer. Toutefois, dans ce cas également, la solution peut ne pas être satisfaisante, car dans certains cas, il faut sinon maintenir la sensibilité à sa valeur nominale, sinon même l'augmenter en l'absence du phénomène, précisément pour ne pas manquer le moment où il apparaît de nouveau.

L'invention se propose de fournir un microsystème permettant d'éviter les problèmes ci-dessus attachés aux circuits de veille/réveil de l'art antérieur.

Elle a donc pour objet un microsystème pour utiliser un signal d'entrée représentant un phénomène dont l'évolution dans le temps est aléatoire, ledit microsystème étant équipé de moyens pour en réduire la consommation d'énergie, ces moyens agissant par une modification des caractéristiques de fonctionnement du microsystème, cette modification ayant pour conséquence le passage d'un état dit actif de celui-ci à au moins un autre état dont l'un est un état dit de veille, ce microsystème comprenant des moyens détecteurs dudit phénomène pour engendrer un signal représentatif qui en représente l'évolution dans le temps et des moyens d'utilisation pour exploiter ledit signal représentatif, un circuit à seuil raccordé entre lesdits moyens détecteurs et lesdits moyens d'utilisation pour soumettre ledit signal représentatif à une comparaison avec un seuil prédéterminé et engendrer un signal de comparaison correspondant, ce microsystème étant caractérisé en ce qu'il comprend également des moyens de réaction qui, en réponse audit signal de comparaison agissent sur lesdits moyens détecteurs pour en modifier les performances de détection, ces moyens de réaction étant capables de modifier au moins un paramètre de fonctionnement desdits moyens détecteurs, cette modification ayant pour effet un changement de la consommation dudit microsystème.

Il résulte de ces caractéristiques que le changement de l'état de fonctionnement du microsystème est provoqué non pas par une action volontaire ou à cause d'une vérification cyclique dépendant du temps, mais d'un changement dans l'évolution du phénomène lui-même que le microsystème est chargé de traiter. Ceci a pour effet que, malgré le caractère aléatoire de l'évolution du phénomène, on peut suivre celui-ci de très près et intervenir sur le changement de l'état de fonctionnement du système dès que cette évolution satisfait un critère prédéterminé.

D'autres caractéristiques de l'invention apparaîtront au cours de la description qui va suivre, donnée uniquement à titre d'exemple et faite en se référant aux dessins annexés sur lesquels:

-   la figure 1 est un schéma très simplifié mettant en évidence les principes de l'invention;
-   la figure 2 montre un schéma d'un circuit permettant de réaliser un premier mode de mise en oeuvre des principes de l'invention, dans le cadre d'un système de mesure;

- la figure 3 montre un schéma d'un circuit permettant de réaliser un second mode de mise en oeuvre des principes de l'invention, également dans le cadre d'un système de mesure;

- la figure 4 est un schéma simplifié d'un circuit selon l'invention dans son application à un microsystème de mesure permettant de mesurer une accélération mécanique;

- la figure 5 montre un circuit plus détaillé mettant en oeuvre l'application représentée sur la figure 4; et

- la figure 6 montre un schéma plus détaillé d'une partie du circuit représenté sur la figure 4.

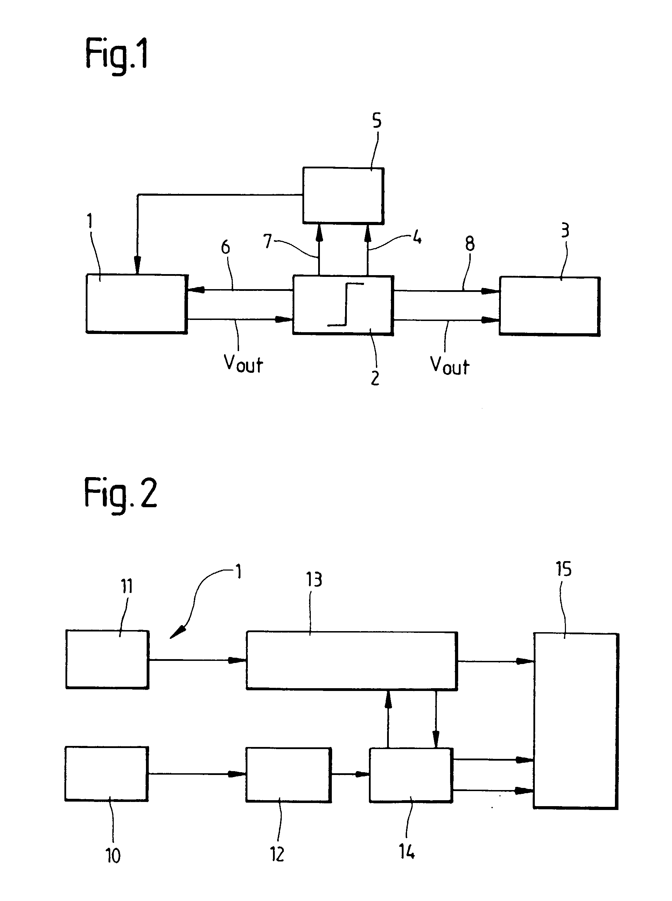

On va tout d'abord se référer à la figure 1 pour expliquer les principes généraux de l'invention. Comme déjà indiqué ci-dessus, celle-ci se propose de réduire la consommation d'énergie de microsystèmes électroniques en général, en surveillant le comportement dans le temps d'un paramètre ou d'un phénomène qui en constitue le signal d'entrée et de n'activer le microsystème électronique que si le phénomène répond à certaines conditions pré définies, comme par exemple sa simple présence ou sa présence sous la forme d'une valeur quelconque non nulle.

Par conséquent, selon le concept général de l'invention, le "phénomène" peut se traduire sous la forme d'un signal électronique quelconque dont l'état ou la valeur est une manifestation de la nécessité pour le microsystème électronique d'entrer dans une phase d'activité plus performante, requérant une consommation d'énergie plus importante du microsystème ou au contraire dans une phase d'une activité de performances minimales au cours de laquelle la consommation du microsystème peut alors être réduite au minimum. Il est à noter que l'invention envisage également le cas dans lequel les performances du microsystème peuvent être ajustées à différentes valeurs situées entre la performance maximale et la performance minimale. Si le microsystème est un système de mesure, la performance peut être par exemple la résolution avec laquelle le phénomène est mesuré.

En effet, comme on va le voir par la suite, ces principes généraux de l'invention se prêtent particulièrement bien à l'application dans les microsystèmes de mesure où le "phénomène" est constitué par la valeur à mesurer et qui se présente à l'entrée du microsystème, tantôt sous la forme d'une valeur réduite, tantôt sous la forme d'une valeur qui se situe dans la plage normale de cette valeur que le microsystème doit couvrir. Toutefois, il est clair que l'invention n'est pas limitée à une telle application plus spécifique.

Ceci étant, la figure 1 montre un microsystème selon l'invention avec tout d'abord un détecteur de phénomène 1 dont la conception doit être telle qu'il puisse fournir à tout moment un signal électrique rendant compte de l'évolution du phénomène dans le temps. Le détecteur 1 est connecté à un circuit à seuil 2 chargé d'examiner si, au cours de l'évolution dans le temps du phénomène, un certain critère est satisfait, ce critère étant d'une façon générale la grandeur sous laquelle le phénomène se présente. Le signal issu du circuit à seuil 2 est transmis à un circuit d'utilisation 3, ce terme indiquant tout circuit permettant d'exploiter le comportement dans le temps du phénomène dans un but prédéterminé quelconque.

Le circuit à seuil 2 est également connecté, par une connexion 4, à un circuit de réaction 5 qui, par sa sortie, est relié au détecteur de phénomène 1. Ce circuit de réaction 5 est capable de modifier le comportement, par exemple la sensibilité, du détecteur 1 pour permettre de l'adapter à l'évolution du phénomène. Par exemple, lorsque le phénomène est faible, la sensibilité du détecteur peut être grande, tandis que dans le cas contraire cette sensibilité est réduite.

Le circuit à seuil 2 est encore relié, par des connexions respectives 6, 7 et 8 à tous les autres circuits du microsystème pour agir d'une façon appropriée sur la consommation de ceux-ci. On verra par la suite que cette action du circuit à seuil 2 sur la consommation peut être réalisée de différentes façons en agissant sur différents paramètres de fonctionnement tels que la fréquence d'échantillonnage, le courant et/ou la tension d'alimentation, la polarisation des circuits etc., ces moyens de réduction de la consommation pouvant être utilisés indépendamment les uns des autres ou, au contraire, par cumulation. Dans ce dernier cas, les effets de réduction de consommation peuvent être conjugués.

Les ensembles 1 et 5 du circuit de la figure 1 désignés respectivement par les expressions "détecteur de phénomène" et "circuit de réaction" peuvent être réalisés de différentes façons, du moment qu'ils remplissent les fonctions générales nécessaires pour l'invention. Par exemple, le détecteur de phénomène 1 peut comporter un capteur unique (on entend ici par "capteur" tout organe mécanique, électrique, électromécanique ou autre capable de délivrer un signal représentatif du phénomène) relié à deux interfaces, l'une pour le mode "actif" et l'autre pour le mode "veille", le circuit de réaction 5 ayant alors le rôle de commuter d'une interface à l'autre ou inversement en fonction du franchissement respectivement dans un sens ou dans l'autre de seuil du circuit 2 par le signal qui lui est appliqué.

Dans une autre configuration, il n'y a qu'une seule interface dont les caractéristiques de fonctionnement peuvent être modifiées sous l'influence du circuit de réaction en coopération avec le circuit à seuil 2.

Dans une troisième configuration représentée sur la figure 2, le détecteur de phénomène peut comporter deux capteurs 10 et 11 du phénomène, avec des sensibilités différentes, le capteur de grande sensibilité 10 étant utilisée dans le mode de veille et le capteur de faible sensibilité pour le mode actif. Cette configuration a l'avantage de permettre la détection proprement dite du phénomène avec une sensibilité maximale, le capteur 10 étant saturé lorsque le phénomène se présente avec sa ou ses valeurs de travail.

Le microsystème de la figure 2 comporte également des interfaces 12 et 13 et un circuit de gestion ou de commande 14 qui réunit les fonctions de détecteur de seuil et de circuit de réaction et qui permet de rendre actif le capteur 11 et son interface 13 associée dès que le seuil est franchi par le signal représentatif du phénomène. L'interface 13 est raccordée à un circuit d'utilisation 15 pour que le signal utile puisse être traité et exploité selon les besoins. Bien entendu le circuit de gestion 14 est également relié aux différents organes du microsystème pour pouvoir le mettre en régime de faible consommation lorsqu'il est en mode "veille". Pour replacer le microsystème dans son mode de veille, il suffit de conférer à l'interface 13 une fonction de surveillance permettant d'envoyer au circuit de gestion 14 un signal, lorsque pendant un temps prédéterminé, le phénomène ne s'est plus manifesté ou n'a plus franchi le seuil pré défini.

Dans le microsystème de la figure 2, le capteur 10 de forte sensibilité peut être nettement plus simple que le capteur 11 qui doit rendre compte du phénomène avec une bonne précision. La consommation en énergie de l'interface 12 qui lui est reliée peut ainsi être très réduite.

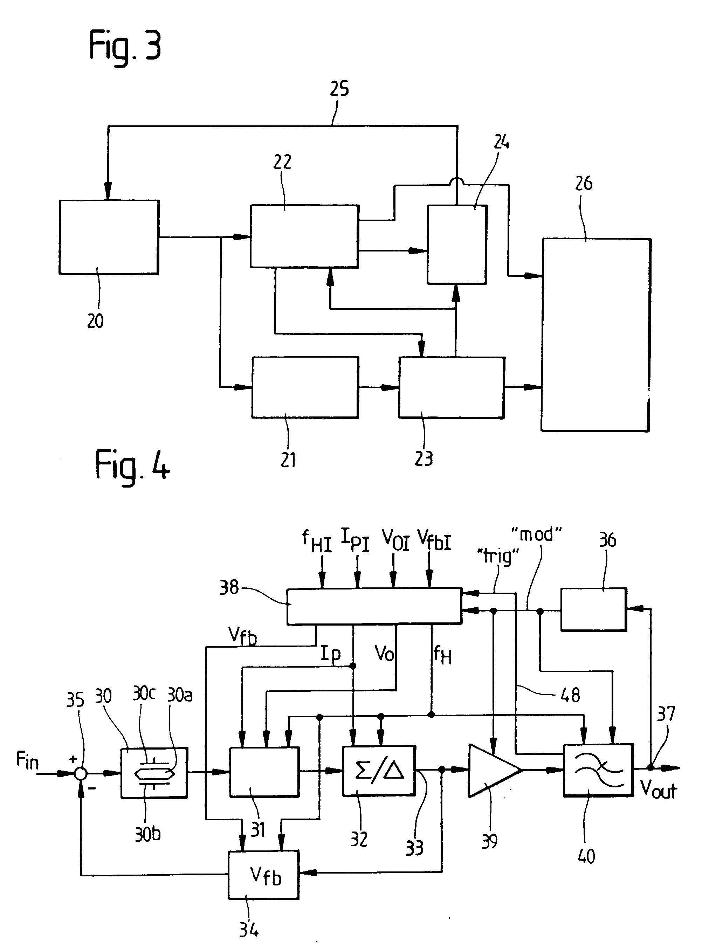

Selon la figure 3, l'invention est mise en oeuvre moyennant l'utilisation d'un seul capteur 20 dont la sensibilité doit pouvoir être réglable selon que le microsystème se trouve en état actif ou en état de veille.

A cet effet, le capteur 20 est raccordé à deux interfaces 21 et 22, l'un 21 affecté au mode de veille et l'autre 22 au mode actif. Les deux interfaces 21 et 22 sont reliés à un circuit 23 de gestion ou de commande.

Un circuit de réaction 24 est connecté à une sortie de l'interface 22 et par une connexion de réaction 25 au capteur 20. Le circuit de réaction 24 a pour fonction de modifier la caractéristique de sensibilité du capteur 20, cette modification étant opérée selon la construction du capteur 20 lui-même. Le signal utile est élaboré dans un circuit d'utilisation 26 qui est connecté à l'interface 22 et au circuit de gestion 23.

Tant qu'aucun phénomène n'est détecté ou que le signal qui le représente ne franchit pas un seuil prédéterminé, le capteur 20 est utilisé dans son mode le plus sensible. Dans le cas contraire, le circuit de gestion 23 active le circuit de réaction 24 qui assure la fonction réactive vis-à-vis du capteur 20 pour en diminuer la sensibilité et lui permettre d'opérer la détection du phénomène "à pleine échelle".

Dans ce qui va suivre, l'invention sera illustrée à l'aide d'un exemple pratique concernant un accéléromètre dans lequel le phénomène dont il a été question ci-dessus est donc l'accélération (d'un mobile équipé du microsystème, par exemple) et dans lequel il s'agit de mesurer l'évolution de cette accélération dans le temps, l'accélération pouvant être présente ou absente selon un cycle temporel totalement aléatoire. Dans cet exemple, on considère que l'organe capteur est un capteur de force de type capacitif. On souligne toutefois qu'il ne s'agit que d'un exemple d'illustration de l'invention auquel celle-ci n'est nullement limitée. Quant aux particularités de conception de l'accéléromètre non liées à la présente invention, on peut se référer à la demande de brevet européen n° 0 590 658 au nom du Demandeur de la présente demande de brevet.

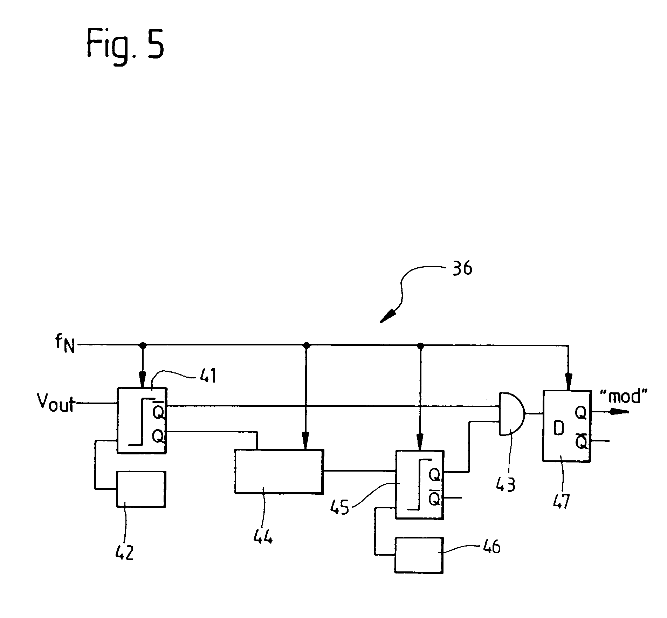

La figure 4 est une représentation schématique d'un tel microsystème d'accéléromètre auquel est appliqué l'invention et qui comprend un capteur capacitif différentiel 30 comportant une masse mobile 30a déplaçable entre deux armatures de condensateur 30b et 30c. Les condensateurs ainsi formés sont raccordés à un circuit 31 dit de mesure de position qui délivre sur sa sortie un signal analogique de mesure de la déviation de la masse 30a, étant entendu que cette mesure est de préférence réalisée moyennant un circuit à capacités commutées, la mesure étant donc faite par échantillonnages au rythme du signal d'horloge du microsystème. Le signal de sortie du circuit de mesure de position 31 est appliqué à un modulateur sigma-delta 32 qui fournit le signal de mesure représentant l'accélération sous forme d'un train d'impulsions de densité variable.

Le signal de sortie apparaissant sur la borne de sortie 33 du modulateur sigma-delta 32 est ramené vers le capteur 30 sous la forme d'une tension $V_{fb}$ qui tend à maintenir la masse 30a toujours dans une position équidistante par rapport aux deux armatures 30b et 30c. Cette tension $V_{fb}$ peut être ajustée à la valeur convenable, par exemple par une amplification, dans un circuit d'adaptation 34 dont la sortie est appliquée au capteur 30 pour maintenir la masse 30a dans sa position neutre. Cette fonction est symbolisée sur la figure 4 par l'élément additionneur 35 qui est sensé également recevoir une valeur $F_{in}$ de la force à mesurer.

Les éléments qui sont nécessaires pour appliquer à cet accéléromètre le concept de l'invention, comprennent un circuit 36 de commutation de mode réagissant en fonction de l'évolution du signal de sortie $V_{out}$ du système, signal qui apparaît sur la borne de sortie 37. La sortie du circuit 36 est connectée d'une part à un circuit 38 d'adaptation de divers paramètres de fonctionnement du microsystème, et d'autre part à un amplificateur 39 monté d'échantillonnage à la sortie du modulateur sigma-delta 32, cet amplificateur étant par ailleurs raccordé à un filtre de décimation 40 chargé d'adapter la fréquence du signal qui lui est appliqué par l'amplificateur 39, aux conditions d'utilisation du signal de mesure dans les circuits (non représentés) qui sont raccordés à la suite du microsystème et qui exploitent le signal d'accélération mesuré.

Le circuit d'adaptation 38 peut être conçu pour adapter au moins l'un des paramètres de fonctionnement du microsystème, c'est-à-dire au moins celui qui est décisif pour la réduction de sa consommation lorsqu'il fonctionne en mode de veille. Ce paramètre est, de préférence la fréquence d'échantillonnage utilisée par le microsystème; toutefois, l'exemple examiné ici permet d'adapter quatre paramètres de fonctionnement en même temps afin de réduire au maximum la consommation du circuit.

La figure 5 représente un exemple de réalisation du circuit de commutation de mode 36 auquel le signal de sortie $V_{out}$ du microsystème est appliqué comme signal d'entrée. Ce signal est reçu par un comparateur numérique 41 qui le compare à une référence conservée dans une mémoire 42. Le comparateur 41 délivre, sur le signal d'horloge $f_N$, un "1" sur sa sortie Q et un "0" sur sa sortie $\overline{Q}$ La sortie $\overline{Q}$ est connectée à une porte logique "ET" 43, tandis que la sortie Q est connectée à un compteur 44 qui compte au rythme de la fréquence $f_N$. La sortie de ce compteur 44 est connectée à un second comparateur numérique 45 qui compare la sortie du compteur à une valeur de référence conservée dans une mémoire 46. Cette valeur de référence est choisie en fonction de la rapidité d'évolution du signal à mesurer. La sortie Q du comparateur 45 est raccordée à la seconde entrée de la porte "ET" 43. La sortie de cette porte "ET" est connectée à un bascule "D" 47 à la sortie Q duquel apparaît le signal de commande de mode "mod". Dans l'exemple décrit, un "O" à la sortie du basculeur 47 commande le mode actif du microsystème et un "1" le mode de veille.

Lorsque le microsystème est en mode de veille et que le signal Vout dépasse le seuil fixé dans la mémoire 42, le signal de sortie du circuit de commutation 36 passe immédiatement à "0" pour engendrer la commande "mode actif" qui place le microsystème dans sa configuration de mesure.

Dans le cas contraire, lorsque le circuit fonctionne dans le mode actif, le signal "mod" ne passe à la valeur "1" que si le signal $V_{out}$ est resté en dessus de la valeur de seuil pendant une durée qui est fixée par la valeur de référence de la mémoire 46.

L'amplificateur 39 et le filtre de décimation 40 sont de conception classique, à ceci près que le facteur de décimation du filtre 40 peut être adapté à la fréquence d'horloge. Par ailleurs, le filtre produit un signal d'autorisation "trig" sur une connexion 48 (figure 4), chaque fois qu'une nouvelle valeur apparaît à sa sortie 37. Ce signal "trig" valide le déclenchement des mesures d'économie prises par le circuit d'adaptation 38 sous l'action du circuit de commande 36.

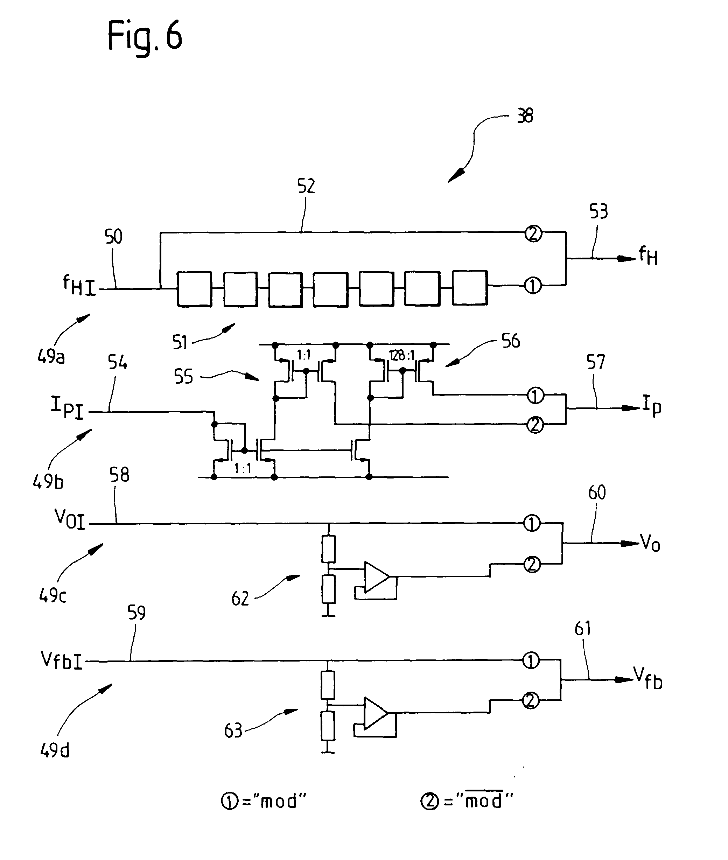

La figure 6 montre la construction du circuit d'adaptation 38. Dans le mode de réalisation décrit, ce circuit comporte quatre voies 49a à 49d chargées respectivement d'opérer l'adaptation d'autant de paramètres de fonctionnement du microsystème. Ainsi les voies d'adaptation 49a à 49d traitent dans l'ordre: une fréquence d'horloge $f_{HI}$, un courant de polarisation $I_{PI}$ de tout ou partie des transistors du microsystème, une tension de polarisation $V_{OI}$ des armatures du capteur 30 et une tension de compensation $V_{fbI}$ appliquée à l'une au moins des armatures du capteur pour maintenir la masse 30a dans sa position intermédiaire.

La voie 49a sur l'entrée 50 de laquelle est donc appliquée la fréquence d'horloge $f_{HI}$ du microsystème, comporte un diviseur de fréquence 51 et une connexion de court-circuit 52 chargée de court-circuiter le diviseur 51. Cette connexion de court-circuit 52 ainsi que la sortie du filtre passe par deux interrupteurs transistorisés (symbolisés par des cercles numérotés 1 et 2) qui sont commandés par le signal "mod, ce dernier ayant subi une opération "ET" avec le signal "trig" du filtre 40.

On comprend donc que lorsque l'interrupteur 1 est fermé, la voie 49a fournit à sa sortie 53 une fréquence d'échantillonnage $F_H$ réduite d'un facteur 128 par exemple (mode de veille), tandis que lorsque l'interrupteur 2 est fermé, cette sortie 53 fournit la fréquence d'horloge $F_{HI}$ n'ayant subi aucune adaptation (mode actif).

Un fonctionnement identique est imposé aux voies 49b, 49c et 49d. La voie 49b reçoit sur son entrée 54 un courant de polarisation $I_{PI}$ qui passe sélectivement selon l'état du signal "mod" par un miroir de courant 55 de rapport 1:1 ou par un miroir de courant 56 de rapport 1:128 par exemple, les miroir de courant 55 et 56 étant mis en circuit respectivement par les interrupteurs 1 et 2 pour fournir sur cette voie 49b soit le courant $I_{PI}$, soit le courant $I_P$ sur la sortie 57.

Les voies 49c et 49d sont identiques dans leur conception et transmettent respectivement directement la tension $V_{OI}$ ou $V_{fbI}$ de l'entrée 58 ou 59 vers la sortie 60 ou 61 soit indirectement par l'intermédiaire d'un diviseur de tension 62 ou 63 en fonction des positions des interrupteurs 1 et 2 de ces voies.

D'après la description qui précède, l'invention permet donc, en fonction de la valeur de la force appliquée au capteur 30 de mettre le microsystème dans un état de veille dans lequel il consomme peu d'énergie ou dans un état actif dans lequel il consomme la quantité nominale d'énergie. En fait, on peut considérer que l'invention permet ainsi de réguler la résolution du système de mesure. On peut, dans le cadre de la présente invention, faire en sorte que cette résolution puisse être régulée à des valeurs intermédiaires, moyennant quoi il suffit que le circuit d'adaptation puisse fournir à la sortie de chacune des voies 49a à 49d, non seulement deux valeurs des paramètres de fonctionnement comme décrit ci-dessus, mais également des valeurs intermédiaires des paramètres.

## Revendications

1. Microsystème pour utiliser un signal d'entrée représentant un phénomène dont l'évolution dans le temps est aléatoire, ledit microsystème étant équipé de moyens pour en réduire la consommation d'énergie, ces moyens agissant par une modification des caractéristiques de fonctionnement du microsystème, cette modification ayant pour conséquence le passage d'un état dit actif de celui-ci à au moins un autre état dont l'un est un état dit de veille, ce microsystème comprenant des moyens détecteurs dudit phénomène (1; 10 à 13; 20, 21 22; 30 à 35) pour engendrer un signal représentatif ($V_{out}$) qui en représente l'évolution dans le temps et des moyens d'utilisation (3; 15; 26; 37) pour exploiter ledit signal représentatif, un circuit à seuil (2; 14; 23; 36) raccordé entre lesdits moyens détecteurs (1; 10 à 13; 20, 21, 22; 30 à 35) et lesdits moyens d'utilisation (3; 15; 26; 37) pour soumettre ledit signal représentatif ($V_{out}$) à une comparaison avec un seuil prédéterminé et engendrer un signal de comparaison ("mod") correspondant, ce microsystème étant caractérisé en ce qu'il comprend également des moyens de réaction (5; 10; 24, 25; 38) qui, en réponse audit signal de comparaison agissent sur lesdits moyens détecteurs (1; 10a 13; 20, 21, 22; 30 à 35) pour en modifier les performances de détection, ces moyens de réaction étant capables de modifier au moins un paramètre de fonctionnement ($f_{HI}$; $I_{PI}$; $V_{OI}$; $V_{fbI}$) desdits moyens détecteurs, cette modification ayant pour effet un changement de la consommation dudit microsystème.

**Patentansprüche**

1. Mikrosystem zum Verwenden eines Eingangssignals, das ein Phänomen repräsentiert, dessen zeitliche Entwicklung zufällig ist, wobei das Mikrosystem mit Mitteln ausgerüstet ist, um seinen Energieverbrauch zu verringern, wobei diese Mittel durch eine Modifikation der Betriebseigenschaften des Mikrosystems einwirken, wobei diese Modifikation den Übergang von einem sogenannten aktiven Zustand des Mikrosystems zu wenigstens einem weiteren Zustand, wovon einer ein sogenannter Bereitschaftszustand ist, zur Folge hat, wobei dieses Mikrosystem Detektormittel (1; 10 bis 13; 20, 21, 22; 30 bis 35), die ein repräsentatives Signal ($V_{out}$) erzeugen, das die zeitliche Entwicklung hiervon darstellt, Nutzungsmittel (3; 15; 26; 37) zum Ausnutzen des repräsentativen Signals sowie eine Schwellenschaltung (2; 14; 23; 36) enthält, die zwischen die Detektormittel (1; 10 bis 13; 20, 21, 22; 30 bis 35) und die Nutzungsmittel (3; 15; 26; 37) geschaltet ist, um das repräsentative Signal ($V_{out}$) einem Vergleich mit einer vorgegebenen Schwelle zu unterwerfen und um ein entsprechendes Vergleichssignal ("mod") zu erzeugen, wobei dieses Mikrosystem dadurch gekennzeichnet ist, daß es außerdem Reaktionsmittel (5; 10; 24, 25; 38) enthält, die als Antwort auf das Vergleichssignal auf die Detektormittel (1; 10 bis 13; 20, 21, 22; 30 bis 35) einwirken, um deren Erfassungsleistung zu modifizieren, wobei diese Reaktionsmittel wenigstens einen Betriebsparameter ($f_{HI}$; $I_{PI}$; $V_{OI}$; $v_{fbI}$) der Detektormittel modifizieren können, wobei diese Modifikation eine Änderung des Verbrauchs des Mikrosystems bewirkt.

**Claims**

1. Microsystem intended to use an input signal representing a phenomenon whose evolution over time is random, said microsystem being provided with means for reducing its consumption of energy, these means acting via a modification of the microsystem operating features, the result of this modification being the passage of the latter from a so-called active state to at least one other state one of which is a so-called stand-by state, this microsystem comprising means for detecting said phenomenon (1; 10 to 13; 20, 21, 22; 30 to 35) in order to generate a representative signal ($V_{out}$) which represents its evolution over time and utilising means (3; 15; 26; 37) for exploiting said representative signal, a threshold circuit (2; 14; 23; 36) connected between to said detecting means (1; 10 to 13; 20, 21, 22; 30 to 35) and said utilising means (3; 15; 26; 37) for subjecting said representative signal ($V_{out}$) to a comparison with a predetermined threshold and for generating a corresponding comparison signal ("mod"), this microsystem being characterized in that it also comprises feedback means (5; 10; 24, 25; 38) which, in response to said comparison signal act upon said detecting means (1; 10a; 13; 20, 21, 22; 30 to 35) to modify their detection performance, these feedback means being capable of modifying at least one operating parameter ($f_{HI}$; $I_{PI}$; $V_{OI}$; $V_{fbI}$) of said microsystem, the result of this modification being a change in the consumption of said microsystem.

# Fig.1

# Fig.2

## Fig. 3

## Fig. 4

# Fig. 5

# Fig. 6

①="mod"   ②="$\overline{mod}$"